Europäisches Patentamt

European Patent Office

Office européen des brevets

(19)

(11) **EP 0 907 979 B1**

(12) **EUROPÄISCHE PATENTSCHRIFT**

(45) Veröffentlichungstag und Bekanntmachung des Hinweises auf die Patenterteilung:
**15.03.2000 Patentblatt 2000/11**

(51) Int Cl.$^7$: **H01M 8/10**, H01M 8/04

(21) Anmeldenummer: 97932708.7

(22) Anmeldetag: **25.06.1997**

(86) Internationale Anmeldenummer:
**PCT/DE97/01320**

(87) Internationale Veröffentlichungsnummer:
**WO 97/50140 (31.12.1997 Gazette 1997/57)**

(54) **DIREKT-METHANOL-BRENNSTOFFZELLE (DMFC)**

DIRECT METHANOL FUEL CELL (DMFC)

PILE A COMBUSTIBLE DIRECTE AU METHANOL

(84) Benannte Vertragsstaaten:
**AT CH DE DK ES FI FR GB IT LI NL SE**

(30) Priorität: **26.06.1996 DE 19625621**

(43) Veröffentlichungstag der Anmeldung:
**14.04.1999 Patentblatt 1999/15**

(73) Patentinhaber: SIEMENS
**AKTIENGESELLSCHAFT
80333 München (DE)**

(72) Erfinder:
- **LUFT, Günter**
  **D-91207 Lauf (DE)**
- **PANTEL, Kurt**
  **D-90562 Heroldsberg (DE)**
- **WAIDHAS, Manfred**
  **D-90427 Nürnberg (DE)**

(56) Entgegenhaltungen:
**EP-A- 0 072 038      US-A- 5 523 177**

- **SHUKIA A K ET AL: "VAPOUR-FEED DIRECT-METHANOL FUEL CELL WITH PROTON-EXCHANGE MEMBRANE ELECTROLYTE" JOURNAL OF POWER SOURCES, Bd. 55, Nr. 1, 1.Mai 1995, Seiten 87-91, XP000541735**
- **PATENT ABSTRACTS OF JAPAN vol. 013, no. 038 (E-709), 27.Januar 1989 & JP 63 237363 A (HITACHI LTD), 3.Oktober 1988, & CHEMICAL ABSTRACTS, vol. 110, no. 12, 20.März 1989 Columbus, Ohio, US; abstract no. 98862,**

- **V.M. SCHMIDT ET AL: "DEMS AND SINGLE CELL MEASUREMENTS OF A DIRECT METHANOL FUEL CELL" PROCEEDINGS OF THE FIRST INTERNATIONAL SYMPOSIUM ON PROTON CONDUCTING MEMBRANE FUEL CELLS I - THE ELECTROCHEMICAL SOCIETY, Bd. 95, Nr. 23, 1995, PENNINGTON, Seiten 267-277, XP002044890**
- **REN X ET AL: "HIGH PERFORMANCE DIRECT METHANOL POLYMER ELECTROLYTE FUEL CELLS" JOURNAL OF THE ELECTROCHEMICAL SOCIETY, Bd. 143, Nr. 1, 1.Januar 1996, Seiten L12-L15, XP000556203**
- **PATENT ABSTRACTS OF JAPAN vol. 014, no. 546 (E-1008), 4.Dezember 1990 & JP 02 234359 A (NIPPON SOKEN INC), 17.September 1990, in der Anmeldung erwähnt**
- **PATENT ABSTRACTS OF JAPAN vol. 014, no. 546 (E-1008), 4.Dezember 1990 & JP 02 234358 A (NIPPON SOKEN INC), 17.September 1990, & CHEMICAL ABSTRACTS, vol. 115, no. 18, 4.November 1991 Columbus, Ohio, US; abstract no. 186706,**
- **K.SCOTT ET AL: "Performance and modelling of a direct methanol solid polymer electrolyte fuel cell" JOURNAL OF POWER SOURCES., Bd. 65, Nr. 1-2, März 1997, LAUSANNE CH, Seiten 159-171, XP002044891**
- **A.S. ARICO ET AL: "Analysis of the Electrochemical Characteristics of a direct Methanol Fuel Cell based on a PtRu/C Anode Catalyst" JOURNAL OF THE ELECTROCHEMICAL SOCIETY, Bd. 143, Nr. 12, Dezember 1996, MANCHESTER, NEW HAMPSHIRE US, Seiten 3950-3959, XP002044892**

**Beschreibung**

Die Erfindung betrifft eine Direkt-Methanol-Brennstoffzelle (DMFC), eine Anlage bestehend aus mehreren DMFC sowie ein Verfahren zum Betreiben von DMFC-Anlagen, mit hohem Spannungs- und Faradaywirkungsgrad.

Seit 1922 ist das Prinzip der DMFC bekannt, bislang konzentrierten sich die Arbeiten auf das Betreiben der DMFC mit flüssigem Brennstoff. Als Brennstoff wird bei der DMFC Methanol genommen, in früheren Jahren wurden auch noch Alternativen zu Methanol wie Ameisensäure, Formaldehyd oder höherkettige Alkohole als Brennstoff ausprobiert. Die Verwendung von Methanol hat dabei die größte technische Bedeutung, weshalb sich auch der Name DMFC eingebürgert hat. Das Betreiben der DMFC mit flüssigem Brennstoff findet bei relativ tiefen Temperaturen statt und hat den Nachteil, daß die Umsetzung des Methanols mit relativ schlechtem Spannungswirkungsgrad erfolgt und zwar aufgrund kinetischer Hemmungen der Anodenreaktion.

Aus der J.P.-22 34 359 ist die Umsetzung dampfförmigen Methanols bekannt. Dabei wird das Wasser für die Befeuchtung der Membran und für den Ablauf der Reaktion [ $CH_3OH + H_2O \rightarrow CO_2 + 6H^+ + 6e^-$] separat rückseitig (also kathodenseitig) zugeführt. Die kathodenseitige Zuführung des Wassers hat den Nachteil, daß bei höheren Stromdichten, der dem Strom proportionale, elektroosmotische Wassertransport der Wasserdiffusion durch die Membran entgegenwirkt. Dies führt zu einem erhöhten Wasserverbrauch, weil die Membran mit zusätzlichem Wasser feucht gehalten werden muß. Außerdem erfolgt die Zudosierung von Wasser bei diesem Stand der Technik nicht lastabhängig.

Ein generelles Problem bei der Realisierung der DMFC bleibt die Diffusion des Brennstoff-Methanols durch den Elektrolyten zur Kathode, wo dieses auch umgesetzt wird. Die Folge davon ist neben dem Verlust des Brennstoffs (Erniedrigung des Faradaywirkungsgrades) eine Verringerung der Zellspannung (Erniedrigung des Spannnungswirkungsgrads).

Aufgabe der vorliegenden Erfindung ist es daher, eine Brennstoffzelle und eine Brennstoffzellenanlage sowie ein Verfahren zum Betreiben der Anlage zur Verfügung zu stellen, bei der bei hohen Stromdichten hohe Spannungs- und Faradaywirkungsgrade realisiert werden. Zudem ist Aufgabe der vorliegenden Erfindung, daß eine Brennstoffzelle, eine Brennstoffzellenanlage sowie ein Verfahren zum Betreiben einer Brennstoffzelle zur Verfügung gestellt wird, die mit geringem elektroosmotischen Wasserverlust in der Zelle und mit einem möglichst geringem Wassertransport durch den Polymerelektrolyten arbeitet.

Als Faradaywirkungsgrad wird der Energienutzungsgrad bezeichnet, der besagt zu welchem Prozentsatz der Brennstoff tatsächlich an der Anode umgesetzt wurde.

Als Spannungswirkungsgrad wird das Verhältnis zwischen Zellspannung unter Strombelastung und thermodynamischer Ruhespannung bezeichnet.

Allgemeine Erkenntnis der Erfindung ist,

- erstens, daß eine Erhöhung des Faradaywirkungsgrades durch Minimierung der Methanoldiffusion innerhalb der Zelle möglich ist, wenn das Methanol lastabhängig zugeführt und entsprechend im Anodenraum verbraucht wird. Dann liegt es nicht in so hoher Konzentration vor, daß ein großer Diffusionsdruck zur Kathode hin entsteht.

- zweitens liegt der Erfindung die Erkenntnis zugrunde, daß der Spannungswirkungsgrad durch Erhöhung der Betriebstemperatur verbessert werden kann, weil das zu einer Minimierung der kinetischen Hemmung der Anodenreaktion führt. Außerdem wird der Faradaywirkungsgrad auch durch die lastabhängige Zuführung der Reaktanden bei geringer Stromdichte erhöht.

- drittens kann das Problem eines zu hohen Wassertransports durch den Polymerelektrolyten durch die Zugabe eines Inertgases wie Kohlendioxid und/oder Stickstoff verringert werden, weil sich dadurch der Wassergehalt auf der Anodenseite der DMFC erniedrigt und weniger Wasser zur Kathode transportiert wird.

Gegenstand der vorliegenden Erfindung ist deshalb eine DMFC, jeweils einen Versorgungs-und Entsorgungskanal für den Brennstoff und das Oxidans, eine Membran-Elektrodeneinheit und bipolare Platten umfassend, wobei dem Versorgungskanal für den Brennstoff ein Verdampfer so vorgeschaltet ist, daß der Brennstoff bei der Umsetzung an der Anode der Brennstoffzelle gasförmig vorliegt. Weiterhin ist Gegenstand der vorliegenden Erfindung eine Brennstoffzellenanlage, die einen Zellstapel aus erfindungsgemäßen Brennstoffzellen, einen Verdampfer und ggf. bis zu drei Pumpen (zwei Dosierpumpen für die Zuführung von Methanol und Wasser und eine Pumpe, die das $CO_2$-Abgas, das im Kreis geführt wird, wieder auf den erforderlichen Überdruck bringt) in der Zuleitung des Brennstoffs sowie in der Ableitung des Brennstoffs einen $CO_2$-Abscheider umfaßt, wobei in dem, dem Brennstoffzellenstapel nachgeschalteten $CO_2$-Abscheider das Kondensat des gasförmigen Brennstoffs vom Kohlendioxid thermisch oder auf sonstige Weise abtrennbar ist.

Weiterhin ist Gegenstand der vorliegenden Erfindung ein Verfahren zum Betreiben einer DMFC-Anlage, bei dem der Brennstoff, zumindest aus Methanol und Wasser bestehend, der Anode gasförmig zugeleitet wird. Weitere vorteilhafte Ausgestaltungen der Erfindung sind in den Unteransprüchen sowie in der Beschreibung, den Erläuterungen zu den Figuren und den Figuren selbst enthalten.

Der Brennstoff der erfindunsgemäßen Brennstoffzelle kann entweder nur aus Methanol oder aus einem beliebigen Gemisch aus Wasser und Methanol bestehen. Falls der Brennstoff aus einem beliebigen Gemisch aus Wasser und Methanol besteht, so kann über eine, dem Verdampfer vorgeschaltete Dosierpumpe die Konzentration an sowohl Methanol oder Wasser lastabhängig einstellbar sein. Der Brennstoff kann dabei mit variablem Druck in die Brennstoffzelle eingeleitet werden und es kann ihm eine beliebige Menge an inertem Trägergas wie $CO_2$, $N_2$, Argon, etc....beigemischt sein.

Eine bevorzugte Ausführungsform der Brennstoffzelle sieht vor, daß dem Methanol/Wassergemisch ein Inertgas wie z.B. Kohlendioxid und/oder Stickstoff oder ähnliches zugemischt wird. Dadurch verringert sich der Wassergehalt auf der Anodenseite der DMFC und es wird weniger Wasser durch den Polymerelektrolyten zur Kathodenseite transportiert.

Der Feuchtegrad $x_f = V_{nW} / V_n$ [$V_{nW}$ = Wasserdampfvolumen unter Normalbedingungen; $V_n$ = Gesamtvolumen unter Normalbedingungen] kann durch das Inertgas beliebig eingestellt werden. Als zweckmäßig erweisen sich Feuchtegrade größer 70%, bevorzugt zwischen 80 und 90%, da dann die Polymermembran noch nicht austrocknet. Der Feuchtegrad wird möglichst hoch sein, damit der Energieaufwand für den Gastransport möglichst gering bleibt. Der Feuchtegrad hängt auch von der Betriebstemperatur der DMFC ab. Je höher diese ist, desto höher muß auch der Feuchtegrad sein, da der Wassergehalt in der Membran bei Temperaturen über 100°C schnell abnimmt. Der Feuchtegrad $x_f$ (auf das Volumen bezogen) ist wie folgt definiert:

$$x_f = V_{nW}/V_n = V_{nW}/ (V_{nW} + V_{nL}) = p_W/p$$

$V_{nL}$ = Trockengasvolumen unter Normalbedingungen, d.h. das Volumen aus gasförmigem Methanol, mit oder ohne Inertgaszusatz;
$p_W$ = Wasserdampfteildruck
$p$ = Gesamtdruck

Die erfindungsgemäße Brennstoffzellenanlage besteht bevorzugt aus einem Zellstapel aus erfindungsgemäßen Brennstoffzellen, sie kann aber auch aus verschiedenen Arten von Brennstoffzellen kombiniert gebaut sein. Dabei sind der Verdampfer und ggf. ein oder zwei Dosierpumpen, die den Brennstoff oder das Wasser lastabhängig zuleiten, in der Zuleitung des Brennstoffs zum Zellstapel integriert.

In einem Anodenkreislauf wird im $CO_2$-Abscheider das entstandene $CO_2$ von dem Abgas, das reich an unverbrauchtem Methanol ist, abgetrennt. Das Abgas liegt dann in kondensierter Form vor und kann im Kreislauf geführt, werden, d.h. in den Verdampfer eingeleitet werden. Weiterhin kann ein Teil des abgetrennten Kohlendioxids über eine Überdruckpumpe, die auch die Zugabemenge an dem Inertgas regelt, ebenfalls im Kreis geführt werden.

Anodenkreislauf bedeutet, daß der Brennstoff Methanol oder Methanol/Wasser-Gemisch, jeweils mit oder ohne Inertgaszusatz, in einem kreisförmig-geschlossenem System an der Anode vorbeigeführt wird, wobei zusätzlicher Brennstoff bei Bedarf dem System zugeführt und gasförmiges Reaktionsprodukt aus dem System abgeschieden wird.

Der unverbrauchte Brennstoff, der im Brennstoffabgas enthalten ist, wird zunächst unter Wärmeausnutzung kondensiert oder abgekühlt und dann wieder in die Zuleitung oder in den Verdampfer eingeleitet. Dabei muß natürlich die lastabhängige Steuerung der Dosierpumpen, die den Zufluß an Wasser/Methanol in den Verdampfer regeln, so konstruiert sein, daß die Konzentrationänderungen des Methanol/ Wassergemisches im Verdampfer durch die Zuleitung aus dem Abgas berücksichtigt wird.

Der unverbrauchte Brennstoff aus dem Brennstoffabgas wird in dem Wärmeaustauscher oder $CO_2$-Abscheider vom enthaltenen Kohlendioxid physikalisch oder u.U. auch chemisch abgetrennt. Physikalische Abtrennung bedeutet dabei, daß die Abtrennung über die unterschiedlichen physikalischen Eigenschaften der Substanzen (wie Dichte, Siedepunkt etc.) erfolgt. Auch die chemische Abtrennung ist denkbar und bedeutet, daß das $CO_2$ chemisch gebunden wird, beispielsweise als Carbonat ausgefällt wird (wegen der Hohen Masse des entstehenden Carbonats energetisch wenig sinnvoll aber alternative chemische Methoden können diskutiert werden).

Als DMFC wird die Direkt-Methanol-Brennstoffzelle bezeichnet, die in Analogie zum allgemeinen Prinzip elektrochemischer Energiewandler aus Anode, Kathode und einem geeigneten Elektrolyten besteht. Die Elektroden werden im allgemeinen rückseitig d.h. mit der zum Elektrolyten abgewandten Seite durch einen Stromkollektor kontaktiert, der zu dem die Aufgabe der Gas- bzw. Reaktandenverteilung hat. Bedingt durch die Art des verwendeten Elektrolyten ergeben sich verschiedene Möglichkeiten zur Realisierung einer DMFC. Im Rahmen der vorliegenden Erfindung werden bevorzugte saure Elektrolyte, und dabei insbesondere saure feste Elektrolyte behandelt. Es eignen sich dabei generell protonenleitende Polymere (Elektrolyt-Membranen), die unter den entsprechenden Betriebsbedingungen stabil sind. Als Beispiel sei Nafion (registrierte Marke) erwähnt. Als weitere Elektrolyte, außer den erwähnten seien exemplarisch noch welche die auf anorganischen Systemen beruhen erwähnt wie Zinnphosphate oder Elektrolyte, die auf Siloxangerüsten basieren.

Als Stromkollektoren werden üblicherweise Werkstoffe auf Kohlenstoffbasis, z.B. Kohlefaserpapiere oder - gewebe, eingesetzt. Als Katalysatoren finden anodenseitig vorrangig Platin/Ruthenium-Legierungen Verwendung, kathodenseitig meist reines Platin. Bei der Realisierung einer Brennstoffzellenanlage, wie z.B.einer Batterie, werden zur Erzielung höherer Spannungen die einzelnen Zellen bipolar in Reihe geschaltet. Die dafür nötigen bipolaren Platten können aus Graphit, metallischen oder sonstigen elektrisch leitenden und korrosionsbeständigen Werkstoffen sein. Die bipolaren Platten übernehmen gleichzeitig die Aufgabe der Reaktandenzuführung. Sie sind deshalb ggf. mit entsprechenden Kanälen strukturiert.

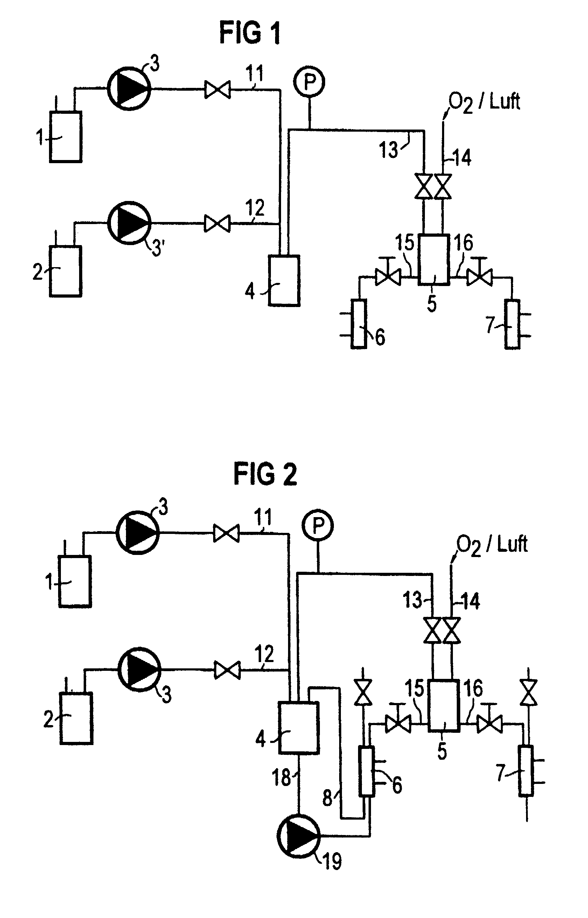

Der Betrieb der DMFC kann, je nach Siedepunkt des Gemisches, bei Temperaturen zwischen 60 und 160°C erfolgen. Bevorzugt wird die Betriebstemperatur in einem Bereich von 100 bis 150°C fallen, typischerweise liegt sie zwischen 120 und 130°C. Dementsprechend wird Methanol oder auch entsprechende Methanol/Wassergemische über die Siedetemperatur hinaus erhitzt und der Zelle gasförmig zugeführt. Dabei wird der Systemdruck so eingestellt, daß er dem Gleichgewichtsdruck des Methanol/Wassergemisches bei der Temperatur der Brennstoffzellen entspricht. Im Anodenraum der DMFC befindet sich deshalb der Dampf im Zustand der Sättigung. Durch diese dampfförmige Zuführung des Reaktanden wird der elektroosmotische Wassertransport minimiert, weil die Menge an Wasser an der Anode stark verringert wird. Die Begriffe "Brennstoff", "Methanol" und "Gemisch aus Wasser und Methanol" bezeichnen im Rahmen der vorliegenden Anmeldung immer einen dampfförmigen Brennstoff, der eine unbestimmte Menge an Inertgas (also von 0% bis zu einem Feuchtegrad von nahezu 100) enthält. Im Falle von $CO_2$ als Inertgas kann es sich um einen Teil des Anodenabgases handeln, das über eine Pumpe und ein entsprechendes Regelventil wieder auf den erforderlichen Überdruck gebracht wird (siehe auch Figur 2) und im Kreis gefahren wird.

Als Brennstoff wird, wie gesagt, ein Methanol/Wassergemisch oder reines Methanol, mit oder ohne Inertgaszusatz, verwendet.

Der Brennstoff wird wie gesagt im Kreislauf geführt über einen, an die Abgasleitung der Brennstoffzelle angeschlossenen Kohlendioxid-Abscheider, der gleichzeitig die Funktion hat, das entstandene Kohlendioxid vom restlichen Abgas abzutrennen.

Als Oxidans wird entweder reiner Sauerstoff oder Luft oder beliebige Gemische dieser Komponenten bezeichnet, wobei das Oxidans der Kathode bevorzugt in überstöchiometrischer Menge zugeführt wird.

Ein besonderes Problem der DMFC ist die Suche nach geeigneten Anodenmaterialien für die Oxidation des Brennstoffs. Neben den genannten Platin/Ruthenium-Legierungen können deshalb je nach Forschungsstand verschiedene Anodenmaterialien und Katalysatoren auf der Anode erfindungsgemäß eingesetzt werden. Beispielhaft sei noch erwähnt, daß unter Umständen durch Zulegieren einer dritten Komponente, wie Zinn oder Nickel, die Aktivität der Anode gegenüber dem binären System Platin/Ruthenium nochmals leicht verbessert werden kann. Die Erfindung soll auch nicht auf Edelmetalle als Katalysatoren und Anodenmaterialien bzw. Kathodenmaterialien beschränkt sein, sondern es sind durchaus auch edelmetallfreie Katalysatoren denkbar.

Die Konzentration an Methanol im Brennstoffgemisch, bezogen auf den unverdampften, flüssigen Zustand kann zwischen 0,05 und 5 Mol/l betragen. Dabei ist besonders bevorzugt eine Konzentration zwischen 0,5 und 1,5 Mol/l.

Als weiterer Betriebsparameter sei noch der Druck erwähnt, der zwischen Normaldruck und geringem Über- und Unterdruck liegen kann. Die vorstehenden Definitionen gelten für die Beschreibung, die Erläuterungen zu den Figuren sowie die Ansprüche.

Im folgenden wird die Erfindung noch anhand von zwei Figuren näher erläutert.

Figur 1 zeigt ein Blockschaltbild einer erfindungsgemäßen Brennstoffzellenanlage.

Figur 2 zeigt ebenfalls ein Blockschaltbild einer erfindungsgemäßen Brennstoffzellenanlage, bei der jedoch der Brennstoff über einen, an die Brennstoffzelle angeschlossenen $CO_2$-Abscheider im Kreis gefahren wird.

Figur 1 zeigt eine Brennstoffzellenanlage, die sowohl mit einem Methanol/Wasser Gemisch als auch mit reinem Methanol als Brennstoff betrieben werden kann. Die Anlage verfügt über die Dosierpumpen 3 und 3', die über ein Steuerungssystem die Zufuhr von Methanol oder/und Wasser lastabhängig regeln. Von links nach rechts gehend zeigt Figur 1 zunächst die beiden Behälter 1 und 2, in denen Wasser und Methanol enthalten sind. Aus diesen Vorratsbehältern 1 und 2 fließen die Bestandteile des flüssigen Brennstoffs, also Wasser und Methanol, in die Dosierpumpen 3 und 3', die jeweils die Strömungsgeschwindigkeit der Flüssigkeiten regeln. Im Falle des Vorratsbehälters 1, der beispielsweise der Wasserbehälter ist, gelangt über die Leitung 11 die lastabhängig in der Dosierpumpe 3 abgemessene Menge Wasser in den Verdampfer 4. Ebenso gelangt eine bestimmte Menge Methanol aus dem Vorratsbehälter 2 über die Dosierpumpe 3' und die Leitung 12 in denselben Verdampfer 4. Im Verdampfer 4 werden beide Flüssigkeiten über den Siedepunkt hinaus erhitzt und über die Leitung 13 wird das im Verdampfer entstandene Dampfgemisch in den Brennstoffzellenstapel 5 eingeleitet. Dort wird es über einen Versorgungskanal in die jeweiligen Anodenräume der einzelnen Brennstoffzellen geleitet. Über die Leitung 15 verläßt das verbrauchte und mit $CO_2$ angereicherte Brennstoffabgas den Brennstoffzellenstapel wieder und gelangt in den Kohlendioxid-Abscheider oder Wärmeaustauscher 6, in dem es unter Nutzung der Wärmeenergie ggf. wieder auskondensiert wird. Das entstandene $CO_2$ kann dort vom Abgas/Kondensat abgetrennt werden. Über die zur Leitung 13 parallele Leitung 14 wird die Brennstoffzelle kathodenseitig mit Oxidans versorgt. Das Oxidansabgas verläßt den Zellstapel über die Leitung 16 wieder und wird in den Wärmeaustauscher 7 geleitet.

Figur 2 zeigt ein ähnliches Blockschaltbild einer erfindungsgemäßen Brennstoffzellenanlage mit dem Unterschied, daß der an die Brennstoff-Abgasleitung aus dem Brennstoffzellenstapel angeschlossene Wärmeaustauscher oder Kohlendioxid-Abscheider 6 über die Leitung 8 mit dem Verdampfer 4 verbunden ist. Über die Leitung 8 gelangt nun das im Wärmeaustauscher oder Kohlendioxid -Abscheider 6 ggf. auskondensierte oder abgekühlte Brennstoffabgas wieder in den Verdampfer 4, wo es über die Leitung 13 erneut der Brennstoffzelle zugeführt wird. Über eine zweite Leitung 18 wird das abgeschiedene $CO_2$ aus dem Wärmetauscher 6 ebenfalls in den Verdampfer 4 geleitet. In der Leitung 18 befindet sich eine Pumpe 19, durch die das $CO_2$ wieder auf den erforderlichen Überdruck gebracht wird.

Die Zusammensetzung des Brennstoffgemisches richtet sich, wie gesagt, nach der jeweiligen Belastung des Brennstoffzellenstapels und der Vorgabe des Feuchtegrades. Über einen Regelmechanismus, der die belastungsmäßig gegebenen Vorgaben an Wasser/ Methanolkonzentrationen als Sollwert mit dem in der Leitung 13 gegebenen Istwert des Gemisches vergleicht, wird die Leistung der Dosierpumpen 3 und 3' einstellt. Ebenso wird die Zugabe an Inertgas über einen Regelmechanismus, der den Feuchtegrad in der Leitung 13 als Istwert mit einem vorgegebenen Feuchtegrad als Sollwert vergleicht, kontrolliert. Diese Ausführungsform der Erfindung ermöglicht somit eine Optimierung des Faraday-Wirkungsgrades.

Eine Brennstoffzellenanlage, insbesondere eine Batterie bestehend aus den erfindungsgemäßen Brennstoffzellen, arbeitet mit einem gegenüber dem Stand der Technik wesentlich erhöhten Spannungs- und Faradaywirkungsgrad. Zusätzlich wird durch das dampfförmige Vorliegen der Reaktanten das "Fluten" ["geflutet" bedeutet, daß Methanol und auch Wasser in die Arbeitsschicht der Kathode gelangt und die Hydrophobität der Gastransportporen senkt, so daß sie voll Reaktionswasser (="geflutet") sind. Dadurch wird der Antransport von Sauerstoff behindert und die Zellspannung bricht zusammen] der Kathode verhindert, zumindest weitgehend zurückgedrängt.

Die Erhöhung des Faraday-Wirkungsgrades wird dabei hauptsächlich durch die Minimierung der Methanol-Diffusion durch die Membran erreicht. Über die lastabhängig gesteuerte Dosierpumpe 3 verdampft nur jeweils soviel Methanol im Verdampfer 4, wie im momentanen Betriebszustand von Brennstoffzellenstapel gefordert wird. Als "Forderung an Brennstoff" wird dabei ein lastabhängiger Sollwert, der durch die Faraday'schen Äquivalente der Reaktion und eine betriebsbedingte Bandbreite, die bevorzugt in einem Überschuß besteht, festgelegt. Die Methanolkonzentration ist so an der Anode lastwechsel folgend variabel einstellbar und kann auch extremen Betriebsparametern (wie Standby und Vollast) in einem Zustand der optimal nahe dem Diffusionsgrenzstrom (d.h. noch mit maximaler Leistung aber nahe dem Diffusionsgrenzstrom entlang der Kennlinie im Spannungs/Strom-Diagramm) ist, eingestellt werden. Die Veränderung der Methanolkonzentration im Gasgemisch muß nicht über die Wasserzufuhr oder den Druck geregelt werden, sondern sie kann selbstverständlich auch über die Zugabe eines inerten Trägergases gesteuert werden.

Zur Einstellung der Dosierpumpen muß keine extra Messung des in der Zelle herrschenden Ist-Wertes an Methanol- oder Brennstoff-Konzentration erfolgen, weil die Dosierpumpe lastabhängig einstellbar ist, und der Verbrauch an Methanol und damit auch die Menge, die im rückgeführten Abgas noch enthalten ist, über den Stromverlauf berechenbar ist.

Eine zusätzliche Kontroll-Feststellung des Istwertes der Methanolkonzentration im gasförmigen Brennstoffgemisch kann aber auch beispielsweise in der Zuleitung 13 vom Verdampfer zum Brennstoffstapel oder im Verdampfer selbst erfolgen. Falls die Feststellung der Istwertes im Verdampfer stattfindet, muß das Gefäß des Verdampfers dimensionsmäßig so gewählt werden, daß unter allen denkbaren Betriebszuständen eine vollständige Verdampfung gewährleistet ist und somit keine Konzentrationsänderung durch Kondensation entsteht. Im Regelfall wird jedoch eine Kontroll-Feststellung des Wasser-Methanol-Mischungsverhältnisses, wenn überhaupt, dann möglichst in der direkten Zuleitung zu dem Versorgungskanal des Brennstoffzellenstapels stattfinden.

Erfindungsgemäß wird ein einfacherer Aufbau der Zelle dadurch realisiert, daß das Wasser anodenseitig und nicht, wie nach dem genannten Stand der Technik, kathodenseitig zugeführt wird.

Eine aus erfindungsgemäßen Brennstoffzellen bestehende Batterie ist u.a. denkbar zum Einsatz in der mobilen Energieversorgung, wie beispielsweise im Automobil. Sie ist aber auch denkbar bei größeren stationären Energieversorgungsanlagen, wie beispielsweise in Kraftwerken oder zur Versorgung von Wohngebäuden oder Geschäftsgebäuden mit elektrischem Strom und Wärme.

**Patentansprüche**

1. Direkt-Methanol-Brennstoffzelle, jeweils einen Versorgungs- und Entsorgungskanal für den Brennstoff und das Oxidans, eine Membran-Elektroden-Einheit und bipolare Platten umfassend, wobei dem Versorgungskanal für den Brennstoff ein Verdampfer so vorgeschaltet ist, daß der Brennstoff bei der Umsetzung an der Anode der Brennstoffzelle gasförmig vorliegt und das Wasser zur Befeuchtung anodenseitig eingebracht wird, wobei im Brennstoff die Konzentrationen an Methanol, Wasser und/oder Inertgas lastabhängig einstellbar sind.

2. Direkt-Methanol-Brennstoffzelle nach Anspruch 1, bei der der Feuchtegrad größer 70% ist.

3. Brennstoffzellenanlage, einen Zellstapel aus Brennstoffzellen nach einem der Ansprüche 1 oder 2, den Verdampfer und ggf. ein bis drei Pumpen in der Zuleitung des Brennstoffs, sowie in der Ableitung des Brennstoffabgases einen Kohlendioxid-Abscheider oder Wärmeaustauscher umfassend, wobei in letztgenanntem unverbrauchter Brennstoff von dem Reaktionsprodukt Kohlendioxid physikalisch oder chemisch abtrennbar ist.

4. Brennstoffzellenanlage nach Anspruch 3, bei der Leitungen des Anodenkreislaufs sowohl für den Brennstoff als auch für das Reaktionsprodukt Kohlendioxid vorgesehen sind.

5. Verfahren zum Betreiben einer Direkt-Methanol-Brennstoffzellenanlage, bei dem der Brennstoff der Anode gasförmig zugeleitet wird und bei dem die Konzentrationen an Methanol, Wasser und/oder Inertgas im Brennstoff lastabhängig eingestellt werden.

6. Verfahren zum Betreiben einer Direkt-Methanol-Brennstoffzellenanlage nach Anspruch 5, bei dem der aus der Brennstoffzelle unverbraucht austretende Brennstoff nach vorheriger Kondensation und/oder das entstandene Kohlendioxid wieder in die Zuleitung zur Anode eingespeist werden.

**Claims**

1. Direct methanol fuel cell which comprises one supply duct and disposal duct each for the fuel and the oxidizing agent, and further comprises a membrane electrode unit and bipolar plates, the supply duct for the fuel having an evaporator connected upstream thereof in such a way that the fuel during the reaction at the anode of the fuel cell is present in the form of a gas and the water for humidification is introduced on the anode side, the concentrations of methanol, water and/or inert gas in the fuel being adjustable as a function of the load.

2. Direct methanol fuel cell according to Claim 1, in which the humidity is greater than 70%.

3. Fuel cell system which comprises a cell stack of fuel cells according to either of Claims 1 or 2, the evaporator and optionally from one to three pumps in the fuel delivery line and further comprises, in the discharge of the fuel exhaust gas, a carbon dioxide separator or heat exchanger, the latter being suitable for unconsumed fuel to be physically or chemically separated therein from the reaction product carbon dioxide.

4. Fuel cell system according to Claim 3, in which lines of the anode circuit are provided both for the fuel and for the reaction product carbon dioxide.

5. Method for operating a direct methanol fuel cell system, wherein the fuel is delivered to the anode in the form of a gas and wherein the concentrations of methanol, water and/or inert gas in the fuel are adjusted as a function of the load.

6. Method for operating a direct methanol fuel cell system according to Claim 5, wherein the unconsumed fuel leaving the fuel cell and/or the carbon dioxide formed are fed back into the delivery line to the anode, the unconsumed fuel first being condensed.

**Revendications**

1. Pile à combustible directe au méthanol, comprenant à chaque fois un canal d'alimentation et un canal d'évacuation pour le combustible et l'oxydant, une unité membrane-électrodes et des plaques bipolaires, un évaporateur étant situé avant le canal d'alimentation pour le combustible de manière à ce que le combustible soit présent sous forme gazeuse lors de la réaction au niveau de l'anode de la pile à combustible et à ce que l'eau destinée à l'humidification soit introduite sur le côté de l'anode, les concentrations en méthanol, en eau et/ou en gaz inerte pouvant être réglées dans le combustible en fonction de la charge.

2. Pile à combustible directe au méthanol selon la revendication 1, dans laquelle le taux d'humidité est supérieur à 70%.

3. Arrangement de piles à combustible comprenant un empilement de piles formé de piles à combustible selon l'une des revendications 1 ou 2, l'évaporateur et, le cas échéant, une à trois pompes dans la conduite d'amenée du combustible, ainsi qu'un séparateur de dioxyde de carbone ou échangeur thermique dans la conduite d'évacuation de l'effluent de combustible, le combustible non consommé pouvant être séparé du produit réactionnel, le dioxyde de carbone, de manière physique ou chimique dans le séparateur ou échangeur.

4. Arrangement de piles à combustible selon la revendication 3, dans lequel des conduites du circuit de l'anode sont prévues aussi bien pour le combustible que pour le produit réactionnel, le dioxyde de carbone.

5. Procédé pour faire fonctionner un arrangement de piles à combustible directes au méthanol, avec lequel le combustible est amené à l'anode sous forme gazeuse et avec lequel les concentrations en méthanol, eau et/ou gaz inerte dans le combustible sont réglées en fonction de la charge.

6. Procédé pour faire fonctionner un arrangement de piles à combustible directes au méthanol selon la revendication 5, avec lequel le combustible non consommé sortant de la pile à combustible est réalimenté après condensation préalable et/ou le dioxyde de carbone produit est réalimenté dans la conduite d'amenée à l'anode.

## FIG 1

## FIG 2